# EUROPÄISCHE PATENTSCHRIFT

(11) **EP 1 011 963 B1**
(45) Veröffentlichungstag und Bekanntmachung des Hinweises auf die Patenterteilung: **09.10.2002**
(21) Anmeldenummer: 98951361.9
(22) Anmeldetag: 08.09.1998
(51) Int. Cl.: B29D 31/00

(54) **VERFAHREN ZUM HERSTELLEN VON AUSSCHNITTEN IN FASERVERBUND-SANDWICHSTRUKTUREN UND DADURCH HERGESTELLTER AUSSCHNITT**
METHOD FOR PRODUCING SECTIONS IN SANDWICH STRUCTURES OF FIBRE COMPOSITES AND SECTIONS PRODUCED ACCORDINGLY
PROCEDE D'OBTENTION DE SECTIONS DANS DES STRUCTURES STRATIFIEES DE COMPOSITES FIBREUX ET SECTIONS AINSI OBTENUES

(30) Priorität: 08.09.1997 DE 19739291
(43) Veröffentlichungstag der Anmeldung: 28.06.2000
(73) Patentinhaber: Deutsches Zentrum für Luft- und Raumfahrt e.V., 53175 Bonn (DE)
(72) Erfinder: UNCKENBOLD, Wilm, Felix, D-38102 Braunschweig (DE); HERRMANN, Axel, D-31228 Peine (DE); PABSCH, Arno, D-38110 Braunschweig (DE)
(74) Vertreter: Einsel, Martin, Dipl.-Phys.
(86) Internationale Anmeldenummer: EP9805680
(87) Internationale Veröffentlichungsnummer: WO99012729

(56) Entgegenhaltungen:
- DE-A- 3 537 402
- DE-U- 8 901 950
- GB-A- 1 145 782
- US-A- 2 839 442
- US-A- 3 879 245
- US-A- 3 912 380
- US-A- 5 365 662

## Beschreibung

Die Erfindung betrifft ein Verfahren zum Herstellen von Faserverbund-Sandwichstrukturen mit oberer und unterer Deckschicht, mindestens einem Profilkern, sowie mit einem Ausschnitt, bei dem der oder die Profilkerne entsprechend dem zu erzeugenden Ausschnitt geformt und/oder zugeschnitten werden und die obere und untere Deckschicht im Bereich des Ausschnittes angepasst ein- und zugeschnitten werden. Sie betrifft ferner eine Faserverbund-Sandwichstruktur mit oberer und unterer Deckschicht, mindestens einem Profilkern, sowie mit einem Ausschnitt, bei dem der oder die Profilkerne entsprechend dem zu erzeugenden Ausschnitt geformt und/oder zugeschnitten sind und die obere und untere Deckschicht im Bereich des Ausschnittes angepasst ein- und zugeschnitten sind.

In heutiger Zeit kommt der Anwendung von großflächigen Faserverbundstrukturen im Bereich des Flugzeug-, Schiff- und des Schienenfahrzeugbaus eine wachsende Bedeutung zu.

Aufgrund der hohen Tragfähigkeit in Verbindung mit einem geringen Strukturgewicht bieten sich hier oftmals Sandwichstrukturen mit Profilkern in Faserverbundbauweise an. Alternativ werden ansonsten Aluminiumstrukturen verwendet. So schlägt die US-PS 3 912 380 eine Sandwich-Struktur für große Reflektionsspiegel mit einer Bienenwabenstruktur vor. Die Bienenwabenstruktur soll aus Aluminium bestehen und die Oberseite und Unterseite jeweils mit einer entsprechenden Beschichtung versehen werden, um den Spiegel aufzunehmen. Genau in der Mitte dieser für ein Teleskop gedachten Struktur ist ein Loch bzw. durchgehender Ausschnitt vorgesehen, wobei dieser Ausschnitt durch einfaches Herausschneiden von Teilen der Bienenwabenstruktur und der Deckschichten vorgesehen ist.

Aber auch in Wandungen für Flugzeuge, Schiffe oder Schienenfahrzeuge sollten stets auch Tür- und/oder Fensterausschnitte vorgesehen werden. Bekannterweise werden diese durch Ausschneiden aus dem Vollmaterial hergestellt. Um dennoch trotz dieser Schwächung der Sandwichstruktur an dieser Stelle ein haltbares Bauwerk zu erhalten, muss ein sehr hoher Aufwand betrieben werden. Um hier eine faserverbundgerechte Integralbauweise der Ausschnitte zu realisieren, müssen notwendigerweise Verstärkungselemente eingefügt werden, was konstruktiv und fertigungstechnisch mit dem genannten hohen Aufwand verbunden ist.

Der Erfindung liegt daher die Aufgabe zugrunde, ein Verfahren zum Herstellen von Faserverbund-Sandwichstrukturen mit Deckschichten und Profilkern sowie Ausschnitten und auch solche Faserverbund-Sandwichstrukturen selbst vorzuschlagen, mit denen eine beanspruchungsgerechte und fertigungsgerechte Konstruktion des Sandwiches mit Ausschnitten für beispielsweise Fenster oder Türen ermöglicht wird.

Die Aufgabe wird bei einem gattungsgemäßen Verfahren dadurch gelöst, dass die obere und/oder untere Deckschicht dabei so ein- und zugeschnitten werden, dass Zuschnitteile stehen bleiben, die den Bereich des Ausschnittes zunächst teilweise überdecken, entlang der Ausschnittskontur umlaufend Bänder eingelegt oder drapiert werden, die Zuschnitteile der oberen und unteren Deckschicht um die geformten oder zugeschnittenen Profilkerne und die umlaufenden Bänder faserverbundgerecht in den Ausschnitt hinein geschlagen werden und die Sandwichstruktur mit Harz durchtränkt und ausgehärtet wird.

Diese Aufgabe wird bei einer gattungsgemäßen Faserverbund-Sandwichstruktur dadurch gelöst, dass Bänder vorgesehen sind, die den Ausschnitt umlaufend umgeben und an die Wandungen der Profilkerne angelegt sind, und dass die untere Deckschicht und/oder die obere Deckschicht im Übermaßzuschnitt im Bereich des Ausschnitts geformt und/oder zugeschnitten sind und in den Ausschnitt hineinragen und die umlaufenden Bänder überdecken.

Weiterbildungen der Erfindungen sind in den jeweiligen Unteransprüchen definiert.

Die Aufgabe wird durch ein Verfahren nach dem Oberbegriff des Anspruchs 1 dadurch gelöst, dass die Profilkerne entsprechend dem zu erzeugenden Ausschnitt geformt und/oder zugeschnitten werden, die obere und die untere Deckschicht im Bereich des Ausschnittes angepasst ein- und zugeschnitten werden, entlang der Ausschnittskontur umlaufend Bänder eingelegt oder drapiert werden, die Zuschnittsteile der oberen und unteren Deckschicht um die geformten oder zugeschnittenen Profilkerne und die umlaufenden Bänder faserverbundgerecht geschlagen werden und die Sandwichstruktur mit Harz durchtränkt und ausgehärtet wird. Die Aufgabe wird auch durch eine Faserverbund-Sandwichstruktur gelöst, mit oberer und unterer Deckschicht, mindestens einem Profilkern, sowie mit einem Ausschnitt, bei dem der oder die Profilkerne entsprechend dem zu erzeugenden Ausschnitt geformt und/oder zugeschnitten sind und die obere und untere Deckschicht im Bereich des Ausschnittes angepasst ein- und zugeschnitten sind, der sich dadurch auszeichnet, dass Bänder vorgesehen sind, die den Ausschnitt umlaufend umgeben und an die Wandungen der Profilkerne angelegt sind, und dass die untere Deckschicht und/oder die obere Deckschicht im Übermaßzuschnitt im Bereich des Ausschnitts geformt und/oder zugeschnitten sind und in den Ausschnitt hineinragen und die umlaufenden Bänder überdecken.

Besonders bevorzugt wird in die Sandwichstruktur direkt vermittels der Formgebung der Profilkerne ein Rahmen konstruktiv integriert, in den beispielsweise eine Fensterscheibe unmittelbar eingefügt und eingeklebt werden kann. Dadurch entfallen weitere konstruktive Maßnahmen zur Befestigung einer solchen Fensterscheibe in dem Ausschnitt.

Aufgrund der vorteilhaft, an die jeweilig auftretenden Belastungen in Form von an der Sandwichstruktur angreifenden Kräften angepassten Gelegelagen oder Gewebelagen der oberen und unteren Deckschichten sowie der Schubstege innerhalb der Sandwichstruktur, auch im Bereich des Ausschnittes, treten dort im wesentlichen keine Verspannungen auf. Eine in diesen Ausschnitt eingefügte Fensterscheibe kann darin demnach nahezu unbelastet von innerhalb der Sandwichstruktur wirkenden Kräften aufgenommen werden.

Besonders bevorzugt sind die im Bereich der Wandungen der ausgeschnittenen oder ausgeformten Profilkeme angefügten Bänder unidirektional orientierte Fasergelege oder -gewebe. Die Bänder sind dabei umlaufend um den Ausschnitt herumgelegt, in Anordnung senkrecht zu den Deckschichten. Dadurch geschieht eine Kraftweiterieitung in Richtung um den Ausschnitt herum, also in dessen Ebene bleibend. Durch das vorteilhafte und bevorzugte Anlagern der jeweiligen Deckschichten auf der Außenseite dieser Bänder aus unidirektional orientiertem Material können die positiven Eigenschaften der Faserorientierung der Deckschichten auch im Bereich des Ausschnittes genutzt werden. Im Bereich der Auflagerfläche einer Fensterscheibe auf der bevorzugten Stufung als Formgebung der den Ausschnitt begrenzenden Profilkerne, in Form von den beiden übereinandergelegten Deckschichten als dann doppelte Gelege- oder Gewebelage, werden ebenfalls Verspannungen in diesem Bereich vorteilhaft auf einen sehr geringen Wert eingeschränkt.

Die Profilkerne werden bevorzugt im Bereich des Ausschnittes jeweils stufenförmig so zugeschnitten, daß eine Autlagerfläche für in den Ausschnitt einzufügende Elemente, wie beispielsweise Fenster- oder Türelemente oder ähnliches entsteht. Dabei sind die Profilkerne vorzugsweise als entformbare, mit Fasergewebe oder -gelege ummantelte Silikonkeme geformt, als nicht entformbare, sogenannte verlorene Schaumkeme ausgeschnitten, oder aber als Gewebeschläuche in entsprechend vorgeformten Mutterformen vorgeformt und als vorgefertigte Hohlkörper auf die untere Deckschicht aufgefügt.

Besonders bevorzugt werden auf die untere aus Fasergelege oder -gewebe mit anwendungsspezifischer Orientierung gefertigte Deckschicht die Profilkerne aufgefügt, die untere Deckschicht anschließend ein- oder ausgeschnitten, insbesondere diagonal bei einem rechteckigen Ausschnitt, anschließend die obere Deckschicht auf die Profilkeme aufgefügt und ein- und ausgeschnitten und anschließend die Zuschnitteile der Deckschichten entsprechend umgeschlagen.

Besonders bevorzugt werden die Deckschichten entlang der Diagonalen des Ausschnittes eingeschnitten und die dabei entstehenden dreieckigen Elemente oder Lappen weiter so zugeschnitten, daß der Bereich ihrer jeweiligen Spitzen parallel zu den Kanten des Ausschnittes mit definiertem Übermaß zu diesen Kanten abgetrennt wird. Dadurch entstehen dann trapezförmige Zuschnitteile, welche anschließend entlang der Stufen der vorgeformten Profilkerne gelegt werden. Das Übermaß des Zuschnittes wird dabei vorteilhaft so gewählt, daß die Deckschichten einander im Bereich der Auflagerflächen für die in den Ausschnitt einzufügenden Elemente überlappend und an den Wandungen der den jeweiligen Ausschnitt begrenzenden Profilkeme anliegend geformt sind.

Vorzugsweise werden nach dem Aushärten der Sandwichstruktur die Kerne der Profilkerne aus dem fertigen Formteil entfernt. Alternativ hierzu können sie aber auch in der Struktur verbleiben, beispielsweise als Schaumkerne, welche sich nicht wieder aus den ausgehärteten Gelege- oder Gewebelagen des Faserverbundmaterials entfemen lassen.

Besonders bevorzugt wird der Ausschnitt als Fenster- oder Türausschnitt einer Wandung eines Schienenfahrzeuges oder Flugzeuges verwendet. Darin werden die vorgefertigten Fensterscheiben lediglich eingefügt und eingeklebt. Eine weitere Bearbeitung ist dadurch nicht mehr erforderlich.

Der Zuschnitt des Fasermaterials als Zuschnitteile, welche die Profilkerne im Bereich des Ausschnittes ummanteln sollen, ergibt sich hinsichtlich seiner Größe aus der Abwicklung der Mantelfläche der Profilkerne. Die aufgrund des diagonalen Zuschnitts und des späteren Drapierens auf den vorgeformten Profilkernen in den Ecken fehlenden kleinen Teilstücke der Gewebelagen der Deckschichten werden im Bereich der senkrecht zu den Deckschichten vorgesehenen Bänder durch diese als senkrechte Wandung des Ausschnittes bzw. Profilkems in diesem Bereich ersetzt. Im Bereich der zu den Deckschichten parallelen Auflagerfläche, in der die beiden Deckschichtenlagen aufeinanderliegen, zeigt sich ebenfalls kein Nachteil durch das in den Ecken jeweils in einem kleinen Bereich aufgrund des diagonalen Zuschnittes bzw. späteren trapezförmigen Zuschnittes der Zuschnitteile der Deckschichten fehlende Material. Dadurch ist dennoch eine gute und stabile Auflagerfläche für beispielsweise eine Fensterscheibe innerhalb des Ausschnittes gegeben.

Besonders bevorzugt werden die Profilkeme dann als sogenannte verlorene Schaumkeme ausgeführt, wenn eine hohe Wärme- und/oder Schallisolierung der Sandwichstruktur gefordert wird. Eine solche Schallisolierung kann noch durch die entsprechende Wahl der Faserorientierung der Deckschichten erzielt werden. Vorteilhaft erweist sich hier insbesondere eine Faserorientierung von ± 30°. Die obere und die untere Deckschicht können auch verschiedene Faserlagen aufweisen, welche jeweils unterschiedliche Orientierungen ihrer Fasern zeigen können. Dadurch werden unterschiedliche vorteilhafte Gestaltungen hinsichtlich der auf die Sandwichstruktur wirkenden Kräfte zugleich aufgefangen und wirken dadurch auf die Sandwichstruktur als solche nicht mehr negativ ein.

Zur näheren Erläuterung der Erfindung werden im folgenden Ausführungsbeispiele anhand der Zeichnungen beschrieben. Diese zeigen in:
- **Figur 1**: eine perspektivische Ansicht von erfindungsgemäß gestalteten Profilkernen, einen Ausschnitt umgrenzend,
- **Figur 2**: eine perspektivische Ansicht der Profilkeme gemäß Figur 1 in Auffügung auf einer unteren Deckschicht,
- **Figur 3**: eine perspektivische Ansicht der Profilkerne mit unterer und oberer Deckschicht,
- **Figur 4**: eine perspektivische Ansicht einer fertiggestellten Sandwichstruktur mit erfindungsgemäßem Ausschnitt und
- **Figur 5**: eine Detailschnittansicht durch den Ausschnitt gemäß Figur 4 mit darin eingefügter Fensterscheibe.

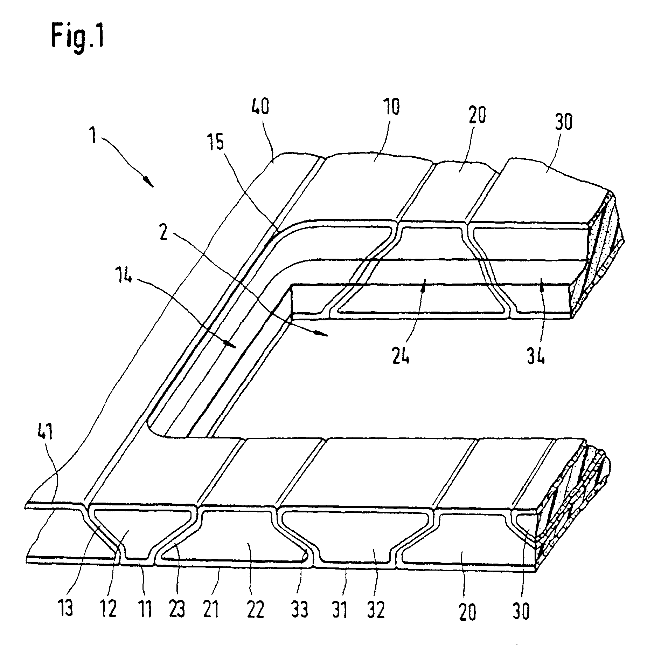

In **Figur 1** ist eine perspektivische Ansicht einer Sandwichstruktur 1 mit bereits teilweise vorgefertigtem Ausschnitt 2 dargestellt. Auch die Sandwichstruktur ist lediglich in Form eines Detailausschnittes des eigentliches Herzstückes einer solchen Struktur, nämlich der Profilkeme, gezeigt. Die Profilkeme sind so zugeschnitten, daß sie zwischen sich den Ausschnitt 2 bilden. Einerseits können durchgehende Profilkeme zu diesem Zweck aufgetrennt werden. Andererseits können aber auch einzelne Teilstücke solcher Profilkerne aneinandergefügt werden und dadurch zwischen sich den Ausschnitt 2 bilden.

Zum Bilden der Sandwichstruktur 1 werden zunächst mehrere Profilkeme nebeneinander jeweils um 180° gedreht angeordnet. Dadurch lagern ihre jeweiligen ummantelnden Fasergelege oder -gewebe im Bereich ihrer jeweiligen Schubstege zweier benachbarter Profilkerne nebeneinander aneinander an. Aus dieser Struktur wird dann der Ausschitt 2 herausgetrennt. Soll beispielsweise eine Fensterscheibe in diesen Ausschnitt später eingefügt werden, wird vorzugsweise eine Stufung 14, 24, 34 im Wandbereich des Ausschnittes vorgesehen. Eine solche Stufung wird für jeden der Profilkerne entsprechend ausgeschnitten.

Der Profilkern 10 gemäß Figur 1 weist einen Kern 12, welcher von einem Fasergewebe oder Fasergelege 11 ummantelt ist, auf. Dieser Kern 12 kann vorzugsweise ein Schaumkem sein. Ein solcher ist nach dem Fertigstellen der gesamten Sandwichstruktur nicht wieder aus dem Fasergewebe entfembar. Er bleibt in diesem als sogenannter verlorener Schaumkern. Neben diesem Profilkern 10 ist der Profilkern 20 angeordnet. Er weist ebenfalls ein Fasergelege oder Fasergewebe 21 auf, welches einen Kern 22 ummantelt. Dieser ist vorzugsweise ein Silikonkem, welcher nach dem Fertigstellen der Sandwichstruktur entformt werden kann, also dem Profilkern 20 vollständig entnommen werden und wiederverwendet werden kann. Es verbleibt dann lediglich das ummantelnde Fasergelege oder Fasergewebe 21 in der Struktur. Neben diesem Profilkern 20 ist in umgekehrter Anordnung ein Profilkern 30 angeordnet. Dieser ist vorzugsweise ebenfalls mit einem Silikonkem 32 in Ummantelung eines Fasergewebes oder Fasergeleges 31 vorgesehen. Der Silikonkern 32 ist ebenfalls vorzugsweise entformbar.

Neben dem Profilkern 30 können wiederum weitere Profilkeme 20 und 30 in jeweils wechselnder Reihenfolge vorgesehen sein. Diese sind in Figur 1 lediglich teilweise noch dargestellt.

Der Profilkem 10 ist auf seiner von dem Profilkern 20 wegweisenden Seite von einem Profilkern 40 benachbart. Dieser ist bereits von dem Silikonkem entformt dargestellt. Es ist daher lediglich das ummantelnde Fasergewebe oder Fasergelege 41 sichtbar. Der Profilkem 40 ist nicht ausgeschnitten. Er bildet daher für den in einem großen Bereich ausgeschnittenen Profilkern 10 einen guten Halt.

Der Kem 12 des Profitkerns 10 ist mit der Stufung 14 versehen. Die jeweiligen Ecken des Ausschnitts 2 sind in diesem Bereich speziell geformt, nämlich als gerundete Ecken 15. Die Stufung 14 ist auch innerhalb des Schubsteges 13 des Profilkems 10 gebildet.

Auch der benachbarte Profilkern 20 ist mit einer entsprechenden, die Stufung 14 des Profilkems 10 fortführenden Stufung 24 versehen. Auch die Schubstege 23 des Profilkerns 20 sind dabei mit in die Stufung einbezogen.

Auch der benachbarte Profilkern 30 ist mit einer entsprechenden Stufung 34 versehen. Auch diese Stufung erstreckt sich wiederum über den gesamten Kern 32 sowie das ummantelnde Fasergewebe oder -gelege 31 des Profilkerns 30 sowie über die Schubstege 33. Der neben dem Profilkern 30 angeordnete Profilkem 20 ist entsprechend dem anderen Profilkern 20 geformt. Dasselbe gilt für den weiteren Profilkern 30, welcher diesem Profilkern 20 benachbart ist.

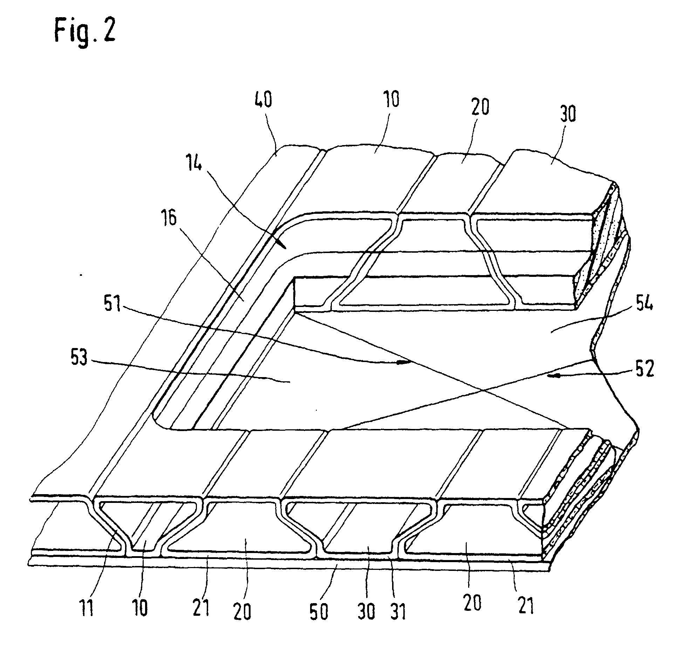

Anstelle der Kerne aus Silikon oder Schaummaterial können die Profilkerne auch aus aufblasbaren Gewebeschläuchen gebildet werden. Diese werden zum entsprechenden Formen in eine Mutterform eingegeben, aufgeblasen und in diesem Zustand harzgetränkt ausgehärtet. Solche aus Gewebeschläuchen gefertigten Profilkeme können dann, wie in Figur 2 im vorderen Bereich dargestellt, nebeneinander angeordnet werden und ebenfalls den Ausschnitt 2 begrenzen. Zum Bilden einer Auflagerfläche für eine später in den Ausschnitt einzufügende Fensterscheibe oder ähnliches kann in diese vorgefertigten Profilkerne aus Gewebeschläuchen im Bereich des Ausschnitts zusätzlich ein Schaumkern eingefügt werden, wie dies im hinteren Bereich des Ausschnittes 2 gemäß Figur 2 dargestellt ist. Altemativ dazu können aber auch die Gewebeschläuche bereits entsprechend in den Mutterformen mit Stufung vorgeformt werden.

Der Profilkern 10 weist in dieser Ausführungsform im Unterschied zu Figur 1 einen entsprechend geteilten Kern 12 auf. Ein langes Teilstück 16 ist hierbei separat gefertigt. Dies kann die Formgebung erleichtern sowie weitere Variationsmöglichkeiten schaffen.

Zum Fertigen einer vollständigen Sandwichstruktur werden die nebeneinander angeordneten Profilkeme auf eine untere Deckschicht 50 aus Fasergewebe oder Fasergelege aufgefügt. Die untere Deckschicht 50 wird im Bereich des Ausschnittes 2 vorzugsweise diagonal mit Einschnitten 51, 52 versehen. Dadurch entstehen dreieckige Lappen 53, 54 welche jeweils wechselweise spiegelsymmetrisch geformt sind.

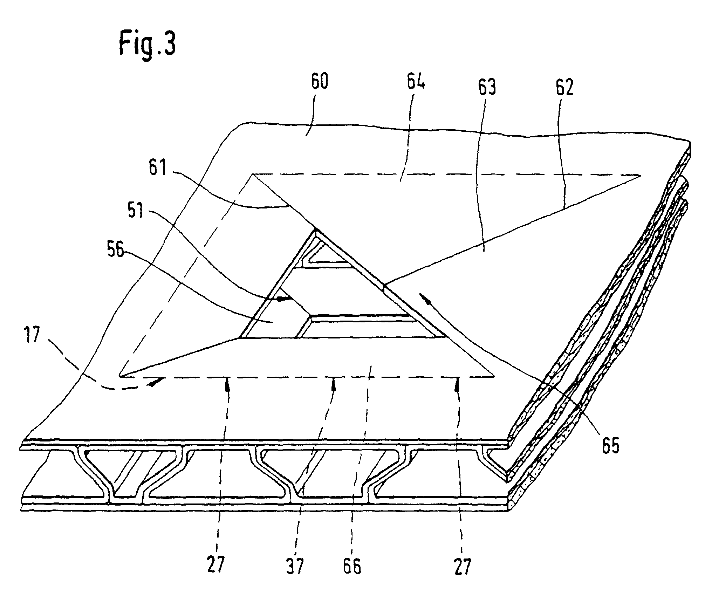

In Figur 3 ist eine perspektivische Ansicht eines weiteren Fertigungsschrittes der Sandwichstruktur mit Ausschnitt dargestellt. Hierbei ist nun eine obere Deckschicht 60 auf die Profilkeme aufgefügt. Diese wird zunächst diagonal mit Einschnitten 61, 62 versehen. Dadurch entstehen wiederum wechselweise gleiche dreieckige Lappen 63, 64.

Um eine saubere Wandung des Ausschnittes 2 zu erhalten, werden die vorderen Spitzen 65 der dreieckigen Lappen parallel zu den oberen, gestrichelt dargestellten Kanten 17, 27, 37 der Profilkerne 10, 20, 30 abgetrennt. Es entstehen dadurch mit entsprechendem definiertem Übermaß gefertigte trapezförmige Zuschnitteile 66.

Auch in der unteren Deckschicht 50 werden, vorzugsweise entsprechend denen in der oberen Deckschicht bemessene Zuschnitteile 56 gebildet. Diese sind in Figur 3 teilweise sichtbar.

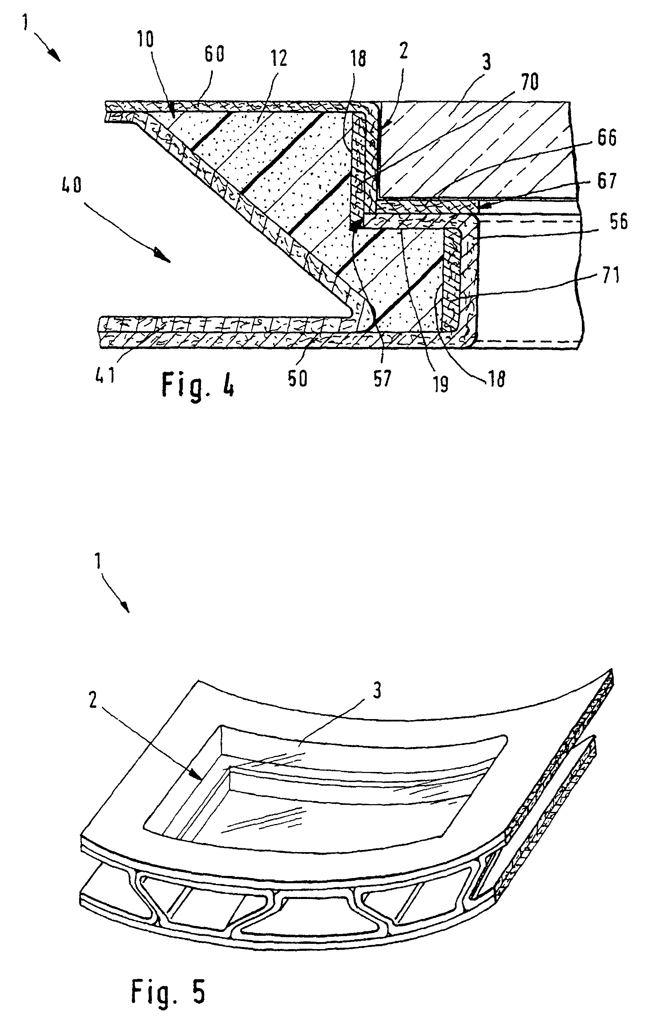

**Figur 4** zeigt eine Schnittansicht durch den Randbereich des Ausschnittes 2 der Sandwichstruktur 1 in fertiggestellter Ausführung. In den Ausschnitt ist dabei bereits eine Fensterscheibe 3 eingefügt. Diese ist vorzugsweise in den Ausschnitt 2 eingeklebt.

Nach dem Zuschneiden in Zuschnitteile 56, 66 der oberen und unteren Deckschichten 50, 60 werden diese Zuschnitteile entsprechend abgeknickt und an die Wandungen der den Ausschnitt 2 begrenzenden Profilkeme angelegt. Vor dem Fertigstellen des Ausschnittes werden aber zunächst an die senkrecht zur oberen Deckschicht 60 angeordnete Wandung 18 des Profilkems 10 ein Band 70, insbesondere ein Gewebeband mit unidirektionaler Orientierung der Fasern, angelegt. Dieses Band dient der Verstärkung des Ausschnittes. Es wird umlaufend entlang dem Ausschnitt eingelegt, so daß durch die Faserorientierung des Gewebes oder Geleges in unidirektionaler Richtung eine Kräfteweiterleitung um den Ausschnitt herum stattfindet.

Auch die untere Wandung 18 des Profilkerns 10, welche senkrecht zur unteren Deckschicht 50 angeordnet ist, wird mit einem entsprechenden Band 71, insbesondere ebenfalls einem Gewebeband mit unidirektionaler Faserorientierung, versehen.

Die Zuschnitteile 56 und 66 werden anschließend um die Gewebebänder 70, 71 herumgeschlagen, ummanteln diese somit von außen. Nachfolgend wird zunächst das Zuschnitteil 56 auf die waagerechte Wandung 19 des Profilkerns 10 aufgelegt. Mit seiner vorderen Kante 57 lagert das Zuschnitteil 56 dann an dem Gewebeband 70 an.

Anschließend wird das Zuschnitteil 66 auf die Oberfläche des Zuschnitteils 56 aufgelegt. Die vordere Kante 67 des Zuschnitteils 66 zeigt in die Öffnung des Ausschnitts 2 hinein. Sie fluchtet vorzugsweise mit der Oberfläche des das Gewebeband 71 ummantelnden Zuschnitteils 56.

Der in Figur 4 neben dem Profilkern 10 mit verlorenem Schaumkern 12 vorgesehene Profilkern 40 zeigt lediglich sein ummantelndes Fasergewebe oder Fasergelege 41. Dieses kann entweder ein Gewebeschlauch, welcher vorgeformt ist in einer Mutterform, oder ein bereits entformter Profilkern 40 sein.

Vor dem Einkleben der Fensterscheibe 3 in den Ausschnitt 2 der Sandwichstruktur 1 wird diese mit Harz getränkt und ausgehärtet. Erst nach dem Aushärten werden die entformbaren Silikonkerne aus der Sandwichstruktur entnommen. Anschließend kann dann die Fensterscheibe 3 in den Ausschnitt 2 eingefügt und darin festgeklebt werden.

In Figur 5 ist eine perspektivische Ansicht einer gewölbten Sandwichstruktur mit eingefügter Fensterscheibe 3 dargestellt. Diese kann beispielsweise Teil einer äußeren Wandung eines Schienenfahrzeuges oder Flugzeuges sein. Aufgrund der Leichtbauweise mit Hilfe der Sandwichstrukturen wird das Gewicht eines solchen Bauteiles gegenüber den bekannten, aus Aluminium hergestellten Wandteilen erheblich vermindert. Zudem wird aber das optische Erscheinungsbild der Sandwichstruktur im Bereich des Ausschnitts 2 erheblich verbessert.

Die Fasern, welche für die Gewebe oder Gelege in der Sandwichstruktur verwendet werden, können beispielsweise aus CFK oder GFK, also Kohlefaseroder Glasfaserverbundwerkstoff hergestellt sein. Anwendungsspezifisch weisen die einzelnen Gelege oder Gewebe entsprechende Orientierung ihrer Fasern auf. Die Schubstege innerhalb der Sandwichstruktur sind dabei mit +/- 45° Faserorientierung versehen.

### Bezugszeichenliste

- 1: Sandwichstruktur
- 2: Ausschnitt
- 3: Fensterscheibe

- 10: Profilkem
- 11: ummantelndes Fasergewebe
- 12: Kern (Schaum/Silikon)
- 13: Schubsteg
- 14: Stufung
- 15: gerundete Ecke
- 16: langes Teilstück
- 17: Kante
- 18: Wandung (senkrecht)
- 19: Wandung (waagerecht)

- 20: Profilkern
- 21: ummantelndes Fasergewebe
- 22: Kern
- 23: Schubsteg
- 24: Stufung
- 27: Kante

- 30: Profilkern
- 31: ummantelndes Fasergewebe
- 32: Kern
- 33: Schubsteg
- 34: Stufung
- 37: Kante

- 40: Profilkern
- 41: ummantelndes Fasergewebe

- 50: untere Deckschicht
- 51: Einschnitt
- 52: Einschnitt
- 53: dreieckiger Lappen
- 54: dreieckiger Lappen
- 56: Zuschnitteil
- 57: vordere Kante

- 60: obere Deckschicht
- 61: Einschnitt
- 62: Einschnitt
- 63: dreieckiger Lappen
- 64: dreieckiger Lappen
- 65: vordere Spitze
- 66: Zuschnitteil
- 67: vordere Kante

- 70: Gewebeband
- 71: Gewebeband

## Patentansprüche

1. Verfahren zum Herstellen von Faserverbund-Sandwichstrukturen mit oberer und unterer Deckschicht (60, 50), mindestens einem Profilkern (10, 20, 30, 40), sowie mit einem Ausschnitt (2), bei dem der oder die Profilkerne (10, 20, 30, 40) entsprechend dem zu erzeugenden Ausschnitt (2) geformt und/oder zugeschnitten werden und die obere und die untere Deckschicht (60, 50) im Bereich des Ausschnittes (2) angepasst ein- und zugeschnitten werden,
**dadurch gekennzeichnet,**
**dass**
-- die obere und/oder untere Deckschicht (50, 60) dabei so ein- und zugeschnitten werden, dass Zuschnitteile (56, 66) stehen bleiben, die den Bereich des Ausschnittes (2) zunächst teilweise überdecken,
-- entlang der Ausschnittskontur umlaufend Bänder (70, 71) eingelegt oder drapiert werden,
-- die Zuschnitteile (56, 66) der oberen und unteren Deckschicht um die geformten oder zugeschnittenen Profilkeme und die umlaufenden Bänder (70, 71) faserverbundgerecht in den Ausschnitt (2) hinein geschlagen werden und
-- die Sandwichstruktur (1) mit Harz durchtränkt und ausgehärtet wird.

2. Verfahren nach Anspruch 1,
**dadurch gekennzeichnet,**
**dass** nach dem Aushärten der Sandwichstruktur die Kerne (12, 22, 32) aus dem ummantelndem Formteil (11, 21, 31, 41) entfernt werden.

3. Verfahren nach Anspruch 1,
**dadurch gekennzeichnet,**
**dass** nach dem Aushärten der Sandwichstruktur die Kerne in den Profilkernen der Struktur verbleiben.

4. Verfahren nach einem der vorstehenden Ansprüche,
**dadurch gekennzeichnet,**
**dass** die Profilkerne im Bereich des Ausschnittes jeweils stufenförmig so zugeschnitten werden, dass eine Auflagefläche für in den Ausschnitt einzufügende Elemente, insbesondere Fenster- oder Türelemente oder ähnliches entsteht.

5. Verfahren nach einem der vorstehenden Ansprüche,
**dadurch gekennzeichnet,**
**dass** die Deckschichten entlang der Diagonalen des Ausschnittes eingeschnitten werden, und dass die dabei entstehenden dreieckigen Elemente (53, 54, 63, 64) so zugeschnitten werden, dass der Bereich ihrer jeweiligen Spitze parallel zu den Kanten des Ausschnitts mit definiertem Übermaß zu diesen Kanten abgetrennt wird.

6. Verfahren nach Anspruch 5,
**dadurch gekennzeichnet,**
**dass** das Übermaß so gewählt wird, dass die Deckschichten einander in einem Bereich überlappen und an den Wandungen (18, 19) der den Ausschnitt begrenzenden Profilkeme oder an den eingefügten Bändern (70, 71) anliegen.

7. Verfahren nach einem der vorstehenden Ansprüche,
**dadurch gekennzeichnet,**
**dass** die Profilkerne als mit Fasergewebe oder -gelege ummantelte entformbare Silikonkerne geformt, als nicht entformbare, verlorene Schaumkerne ausgeschnitten oder als Gewebeschläuche in entsprechend geformten Mutterformen vorgeformt und als vorgefertigte Hohlkörper auf die untere Deckschicht (50) aufgefügt werden.

8. Verfahren nach einem der vorstehenden Ansprüche,
**dadurch gekennzeichnet,**
**dass** die Bänder Fasergewebe oder -gelege sind mit unidirektionaler Orientierung und mit der unidirektionalen Orientierung umlaufend, senkrecht zu den Deckschichten auf die Wandungen der Profilkerne aufgefügt werden.

9. Verfahren nach einem der vorstehenden Ansprüche,
**dadurch gekennzeichnet,**
**dass** auf die untere Deckschicht (50) aus Fasergewebe oder -gelege mit anwendungsspezifischer Orientierung die Profilkerne aufgefügt werden, dass die untere Deckschicht ein- und ausgeschnitten wird, dass anschließend die obere Deckschicht (60) auf die Profilkerne aufgefügt und ein- und ausgeschnitten wird und dass die Zuschnitteile (56, 66) der Deckschichten entsprechend umgeschlagen werden.

10. Faserverbund-Sandwichstruktur mit oberer und unterer Deckschicht (60, 50), mindestens einem Profilkern (10, 20, 30, 40), sowie mit einem Ausschnitt (2), bei dem der oder die Profilkerne (10, 20, 30, 40) entsprechend dem zu erzeugenden Ausschnitt (2) geformt und/oder zugeschnitten sind und die obere und untere Deckschicht (60, 50) im Bereich des Ausschnittes (2) angepasst ein- und zugeschnitten sind,
**dadurch gekennzeichnet,**
**dass** Bänder (70, 71) vorgesehen sind, die den Ausschnitt (2) umlaufend umgeben und an die Wandungen der Profilkerne (10, 20, 30, 40) angelegt sind, und
**dass** die untere Deckschicht (50) und/oder die obere Deckschicht (60) im Übermaßzuschnitt im Bereich des Ausschnitts (2) geformt und/oder zugeschnitten sind und in den Ausschnitt (2) hineinragen und die umlaufenden Bänder (70, 71) überdecken.

11. Faserverbund-Sandwichstruktur nach Anspruch 10,
**dadurch gekennzeichnet,**
**dass** die Bänder Fasergewebe oder -gelege mit unidirektionaler Orientierung sind.

12. Faserverbund-Sandwichstruktur nach Anspruch 10 oder 11,
**dadurch gekennzeichnet,**
**dass** die Profilkerne entformbare Silikonkerne mit Fasergelege oder -gewebe-Ummantelung, extrudierbare Gewebeschläuche oder nicht entformbare Schaumkerne aufweisen.

13. Faserverbund-Sandwichstruktur nach einem der Ansprüche 10 bis 12,
**dadurch gekennzeichnet,**
**dass** im Bereich des Ausschnitts doppelte Gewebe- oder Gelegelagen vorgesehen sind, so
**dass** senkrecht zur Ebene der jeweiligen Deckschicht (50, 60) außerhalb des Ausschnitts (2) im Bereich des Ausschnitts (2) die Bänder (70, 71) mit unidirektionaler Orientierung und die Deckschicht (50, 60) übereinanderliegen, und
**dass** parallel zur Ebene der Deckschichten (50, 60) außerhalb des Ausschnitts im Bereich des Ausschnitts (2) eine Auflagerfläche für eine Fensterscheibe, ein Türelement oder dergleichen und eine der beiden Deckschichten (50, 60) übereinander liegen.

14. Faserverbund-Sandwichstruktur nach einem der Ansprüche 10 bis 13,
**dadurch gekennzeichnet,**
**dass** der Ausschnitt ein Fensterausschnitt oder Türausschnitt ist, insbesondere einer Wandung eines Schienenfahrzeuges oder eines Flugzeuges.

15. Faserverbund-Sandwichstruktur nach Anspruch 14,
**dadurch gekennzeichnet,**
**dass** in den fertiggestellten Ausschnitt eine Fensterscheibe eingefügt und darin eingeklebt ist.

## Claims

1. Method for producing composite fibre sandwich structures with an
upper and lower outer layer (60, 50) at least one sectional core (10, 20, 30, 40,) and with a cut-out (2) in which the sectional core(s) (10, 20, 30, 40) are shaped and/or cut to size in accordance with the cut-out (2) to be produced and the upper and lower outer layer (50, 60) are adjusted in the area of the cut-out by being cut and cut to size,
**characterised in that:**
- the upper and/or lower outer layer (50, 60) are so cut and cut to size, that cut-to-size components (56, 66) remain which initially partly cover the region of the cut-out (2),
- strips (70, 71) are laid or draped around the perimeter of the cut-out contour,
- the cut-to-size components (56, 66) of the upper and lower outer layer are wrapped around the shaped or cut-to-size sectional cores and the strips (70, 71) around the perimeter, appropriate to the composite fibre and
- the sandwich structure (1) is soaked with resin and cured.

2. Method according to claim 1, **characterised in that** after the sandwich structure has been cured, the cores (12, 22, 32) are removed from the sheathing moulded component (11, 21, 31, 41).

3. Method according to claim 1, **characterised in that** after the sandwich structure has been cured, the cores remain in the sectional cores of the structure.

4. Method according to one of the preceding claims, **characterised in that** the sectional cores in the area of the cut-out are each cut to size with a step in such a way that a support surface is formed for elements to be inserted in the cut-out, especially window or door elements or similar items.

5. Method according to one of the preceding claims, **characterised in that** the outer layers are cut through along the diagonals of the cut-out and that the triangular elements (53, 54, 63, 64) produced in this way are cut to size in such a way that their respective tip areas are cut off parallel to the edges of the cut-out with defined oversizing in respect of these edges.

6. Method according to claim 5, **characterised in that** the oversizing is selected in such a way that the outer layers overlap each other in one area and are in contact with the walls (18, 19) of the profile cores which border the cut-out or the inserted strips (71, 72).

7. Method according to one of the preceding claims, **characterised in that** the sectional cores take the form of removable silicone cores, sheathed by woven or non-woven fibre materials, of non-removable lost foam cores or of woven hoses, pre-shaped in appropriately shaped master moulds and joined to the lower outer layer (50) as prefabricated hollow components.

8. Method according to one of the preceding claims, **characterised in that** the strips consist of woven or non-woven fibre materials with a unidirectional orientation and are applied to the walls of the sectional cores, perpendicular to the outer layers, with the unidirectional orientation running round the perimeter.

9. Method according to one of the preceding claims, **characterised in that** the sectional cores are joined to the lower outer layer (50), consisting of woven or non-woven fibre materials with an orientation specific to the application, that the lower outer layer is cut through and cut away, that the upper outer layer (60) is then placed on the sectional cores and cut through and cut away and that the cut-to-size components. (56, 66) of the outer layers are wrapped round accordingly.

10. A composite fibre sandwich structure with upper and lower outer layer (60, 50), at least one sectional core (10, 20, 30, 40), and with a cut-out (2), in which the sectional cores (10, 20, 30, 40) are shaped and/or cut to size in accodance with the cut-out (2) to be produced and the upper and lower outer layer (60, 50) are adjusted in the area of the cut-out (2) by being cut and cut to size,
**characterised in that**
strips (70, 71) are provided which surround the cut-out (2) and are applied to the walls of the sectional cores (10, 20, 30, 40) and
**in that**
the lower outer layer (50) and/or the upper outer layer (60) are shaped and/or cut in oversize manner in the area of the cut-out (2) and project into the cut-out (2) and cover the surrounding strips (70, 71).

11. A composite fibre sandwich structure according to claim 10,
**characterised in that**
the strips are woven or non-woven fibre materials with a unidirectional orientation.

12. A composite fibre sandwich structure according to claim 10 or 11,
**characterised in that**
the sectional cores consist of removable silicone cores sheathed by a woven or non-woven fibre material, extrudable woven hoses or non-removable foam cores.

13. A composite fibre sandwich structure according to one of the claims 10 to 12,
**characterised in that**
double layers of woven or non-woven material are provided in the area of the cut-out so
**that**
perpendicular to the plane of the respective outer layer (50, 60) the strips (70, 71) with unidirectional orientation and the outer layer (50, 60) lie over one other outside the cut-out (2) in the region of the cut-out (2), and
**in that**
parallel to the plane of the outer layers (50, 60), a support surface for a window pane, a door element or the like and one of the two outer layers (50, 60) lie over one another outside the cut-out in the region of the cut-out (2).

14. A composite fibre sandwich structure according to one of the claims 10 to 13,
**characterised in that**
the cut-out is a window cut-out or a door cut-out, especially walling of a rail vehicle or an aircraft.

15. A composite fibre sandwich structure according to claim 14,
**characterised in that**
a window pane is inserted into the completed cut-out and fitted in it with adhesive.

## Revendications

1. Procédé pour fabriquer des structures stratifiées à base d'assemblage de fibres avec une couche de revêtement supérieure et une couche de revêtement inférieure (60, 50), au moyen d'un noyau profilé (10, 20, 30, 40), et avec une découpe (2), sur laquelle le ou les noyaux profilés (10, 20, 30, 40) sont formés et/ou coupés en fonction de la découpe (2) à générer et la couche de revêtement supérieure et la couche de revêtement inférieure (60, 50) sont entaillées et coupées de façon adaptée dans la zone de la découpe (2),
**caractérisé**
**en ce que**
- la couche de revêtement supérieure et/ou la couche de revêtement inférieure (50, 60) sont entaillées et coupées ici de telle façon qu'il reste des parties coupées (55, 66) qui recouvrent d'abord partiellement la zone de la découpe (2),
- des bandes (70, 71) sont insérées ou drapées à la périphérie le long du contour de découpe,
- les parties coupées (56, 66) de la couche de revêtement supérieure et de la couche de revêtement inférieure sont enfoncées à l'intérieur de la découpe (2) en fonction de l'assemblage de fibres autour des noyaux profilés formés ou coupés et des bandes (70, 71) périphériques et
- la structure stratifiée (1) est imbibée et durcie avec de la résine.

2. Procédé selon la revendication 1,
**caractérisé**
**en ce que** les noyaux (12, 22, 32) sont enlevés de la partie moulée (11, 21, 31, 41) enveloppante après le durcissement de la structure stratifiée.

3. Procédé selon la revendication 1,
**caractérisé**
**en ce que** les noyaux restent dans le noyau profilé de la structure après le durcissement de la structure stratifiée.

4. Procédé selon l'une quelconque des revendications précédentes,
**caractérisé**
**en ce que** les noyaux profilés sont coupés dans la zone de la découpe à chaque fois en gradins de façon à obtenir une surface d'appui pour des éléments à insérer dans la découpe, en particulier des éléments de fenêtre ou porte ou similaires.

5. Procédé selon l'une quelconque des revendications précédentes,
**caractérisé**
**en ce que** les couches de revêtement sont entaillées le long des diagonales de la découpe et en ce que les éléments (53, 54, 63, 64) triangulaires qui se forment alors sont coupés de telle façon que la zone de leur extrémité respective est séparée parallèlement aux arêtes de la découpe avec une surmesure définie par rapport à ces arêtes.

6. Procédé selon la revendication 5,
**caractérisé**
**en ce que** la surmesure est choisie de façon que les couches de revêtement se chevauchent dans une zone et viennent s'appuyer sur les parois (18, 19) des noyaux profilés délimitant la découpe ou sur les bandes (70, 71) insérées.

7. Procédé selon l'une quelconque des revendications précédentes,
**caractérisé**
**en ce que** les noyaux profilés sont formés comme des noyaux de silicone démoulables et enveloppés de tissu ou de structure en fibre, sont découpés comme des noyaux de mousse perdus et non démoulables ou sont préformés sous la forme de flexibles en tissu dans des moules-mères formés de façon appropriée et sont insérés sous la forme de corps creux préfabriqués sur la couche de revêtement (50) inférieure.

8. Procédé selon l'une quelconque des revendications précédentes,
**caractérisé**
**en ce que** les bandes sont des tissus ou des structures en fibre avec une orientation unidirectionnelle et sont posées sur les parois des noyaux profilés à la périphérie avec l'orientation unidirectionnelle et perpendiculairement aux couches de revêtement.

9. Procédé selon l'une quelconque des revendications précédentes,
**caractérisé**
**en ce que** les noyaux profilés sont posés sur la couche de revêtement (50) inférieure à base de tissu ou de structure en fibre avec une orientation spécifique à l'application, en ce que la couche de revêtement inférieure est entaillée et découpée, en ce que la couche de revêtement (60) supérieure est posée ensuite sur les noyaux profilés et entaillée et découpée et en ce que les parties coupées (56, 66) des couches de revêtement sont retournées en conséquence.

10. Structure stratifiée à assemblage de fibres avec des couches de revêtement supérieure et inférieure (60, 50), au moins un noyau profilé (10, 20, 30, 40), et avec une découpe (2), sur laquelle le ou les noyaux profilés (10, 20, 30, 40) sont formés et/ou coupés en fonction de la découpe (2) à générer et les couches de revêtement supérieure et inférieure (60, 50) sont entaillées et coupées de façon adaptée dans la zone de la découpe (2),
**caractérisée**
**en ce qu'**il est prévu des bandes (70, 71) qui entourent la découpe (2) de façon périphérique et sont posées sur les parois des noyaux profilés (10, 20, 30, 40) et ce que la couche de revêtement inférieure (50) et/ou la couche de revêtement supérieure (60) sont formées et/ou coupées dans la coupe de surmesure dans la mesure de la découpe (2) et dépassent dans la découpe (2) et recouvrent les bandes (70, 71) périphériques.

11. Structure stratifiée à assemblage de fibres selon la revendication 10,
**caractérisée**
**en ce que** les bandes sont des tissus ou des structures en fibre avec une orientation unidirectionnelle.

12. Structure stratifiée à assemblage de fibres selon la revendication 10 ou 11,
**caractérisée**
**en ce que** les noyaux profilés présentent des noyaux de silicone démoulables avec des structures en fibre ou une enveloppe de tissu en fibre, des flexibles en tissu extrudables ou des noyaux de mousse non démoulables.

13. Structure stratifiée à assemblage de fibres selon l'une quelconque des revendications 10 à 12,
**caractérisé**
**en ce qu'**il est prévu des couches doubles de tissu ou de structure dans la zone de la découpe,
de telle sorte
que les bandes (70, 71) avec une orientation unidirectionnelle et la couche de revêtement (50, 60) sont superposées perpendiculairement au plan de la couche de revêtement (50, 60) respective à l'extérieur de la découpe (2) dans la zone de la découpe (2), et
**en ce que**, parallèlement au plan des couches de revêtement (50, 60), une surface d'appui pour une vitre, un élément de portes ou similaire et l'une des deux couches de revêtement (50, 60) sont disposées de façon superposée à l'extérieur de la découpe dans la zone de la découpe.

14. Structure stratifiée à assemblage de fibres selon l'une quelconque des revendications 10 à 13,
**caractérisée**
**en ce que** la découpe est une découpe de fenêtre ou une découpe de porte, en particulier une paroi d un véhicule sur rails ou d'un véhicule.

15. Structure stratifiée à assemblage de fibres selon la revendication 14,
**caractérisé**
**en ce qu'**une vitre est insérée dans la découpe faite et est collée à l'intérieur.
